Europäisches Patentamt

European Patent Office

Office européen des brevets

(19)

(11) Publication number: **0 121 576**
**A1**

## EUROPEAN PATENT APPLICATION

published in accordance with Art. 158(3) EPC

(21) Application number: **83903399.0**

(22) Date of filing: **19.10.83**

Data of the international appli-
cation taken as a basis:

(86) International application number:
**PCT/JP 83/00366**

(87) International publication number:
**WO 84/01537 (26.04.84 84/11)**

(51) Int. Cl.³: **B 25 J 9/00**

(30) Priority: **19.10.82 JP 182086/82**

(43) Date of publication of application: **17.10.84**
**Bulletin 84/42**

(84) Designated Contracting States: **DE FR GB**

(71) Applicant: **FANUC LTD, 5-1, Asahigaoka 3-chome**
**Hino-shi, Tokyo 191 (JP)**

(72) Inventor: **NAKASHIMA, Seiichiro, 5-3-2, Hino-Honcho**
**Hino-shi, Tokyo 191 (JP)**
Inventor: **INAGAKI, Shigemi, 3-6-12, Tokura**
**Kokubunji-shi, Tokyo 185 (JP)**
Inventor: **ITO, Susumu, 3-27, Tamadaira Hino-shi,**
**Tokyo 191 (JP)**

(74) Representative: **Allman, Peter John, Marks and Clerk**
**Scottish Life House Bridge Street, Manchester M3 3DP**
**(GB)**

(54) **ARTICULATED ARM TYPE OF INDUSTRIAL ROBOT.**

(57) An articulated arm type of industrial robot is provided
with a wrist-operating mechanism comprising: a robot fore-
arm (20) rotatably attached to the upper end of a robot
upper arm (16) which is rotatably attached to a rotary or
horizontally movable robot body (10) of an industrial robot;
a wrist unit (30) attached to the free end of the robot forearm
(20); three rotary shafts, i.e., an outer shaft (52), an inter-
mediate shaft (54) and an inner shaft (56), which are coaxi-
ally arranged within the robot forearm; an outer wrist unit
(34) connected to the end of the outer shaft (52) and which
is adapted to rotate therewith at a reduced speed; and a
hand retainer (38) connected to the intermediate shaft (54)
by at least a pair of a bevel gear mechanism (80) and a
reduction gear (34) within the outer wrist unit and which is
adapted to be rotatable about an axis of rotation substanti-
ally the same as the axis of rotation of the outer wrist unit.

DESCRIPTION

TECHNICAL FIELD

The present invention relates to an industrial robot of the articulated arm type having a robot forearm provided with a wrist pivotally joined for an up-down swing motion to the upper end of a robot upper arm swingably attached at the lower end thereof to a robot body of the swivel type or the horizontal traverse type and more particularly to motion transmitting mechanisms incorporated into the forearm and wrist of the same robot.

BACKGROUND ART

The industrial robot is formed so as to attach a robot hand to the free end of the robot wrist for various robot motions, such as holding, transporting, or assembling, by means of the robot hand. Accordingly, the arm and the wrist of the industrial robot have degrees of freedom of motion respectively to enable movement and positional changes within the space of the robot hand to attain the desired robot motions. Therefore, the driving sources for driving the arm and the wrist of the industrial robot are mounted on the industrial robot per se. These driving sources include electric motors, hydraulic motors, and hydraulic cylinders, which are comparatively heavy. In planning the diversification of the robot function, particularly of the articulated industrial robot, by providing a large degree of freedom of motion for the wrist joined to the extremity of the robot forearm, designing the disposition of the driving sources in the industrial robot, and designing motion transmitting mechanisms capable of transmitting motions from the driving sources to the wrist for the motion of the wrist of a plural degrees of freedom of motion, there are serious problems commonly encountered by the designers. Since a robot hand is attached to the extremity of the wrist and the robot hand is used for holding large and heavy work, the functional members of the robot, such as the wrist, are required to be as compact as possible, lightweight, and capable of suitably carrying out the desired robot motions even within a limited space.

DISCLOSURE OF THE INVENTION

Accordingly, it is an object of the present invention to provide an industrial robot of the articulated arm type equipped with a novel motion transmitting mechanism capable of being applied to an industrial robot of the articulated arm type having two arm sections, namely, a forearm and an upper arm, joined to the robot body, capable of providing three degrees of freedom for a wrist attached to the extremity of the forearm, and capable of securing the compact construction of the arm and the wrist.

According to the present invention, there is provided an industrial robot of the articulated arm type having a robot forearm pivotally joined for an up-down swing motion to the upper end of an upper arm pivotally joined at the lower end thereof to a robot body, and a wrist unit joined to the extremity of the robot forearm; characterized by comprising three coaxial rotary shafts, namely, an outer shaft, a middle shaft, and an inner shaft, provided within the forearm; an outer wrist box connected to one end of the outer shaft for turning at a reduced speed together with the outer shaft; an inner wrist box interlocked within the outer wrist box through at least a set of bevel gear mechanisms and a reduction gear with the middle shaft and capable of pivoting on an axis of rotation practically perpendicularly intersecting the axis of rotation of the outer shaft; and a hand holding unit interlocked within the outer wrist box through at least two sets of bevel gear mechanisms and a reduction gear with the inner shaft and capable of turning about an axis extending practically in alignment with the axis of rotation of the outer wrist box. In an industrial robot of the articulated arm type according to the present invention, the motion transmitting mechanism capable of providing three degrees of freedom of motion for the robot wrist joined to the extremity of the forearm of the robot can be contained within the interiors of the forearm and the wrist unit of the robot.

BRIEF DESCRIPTION OF THE DRAWINGS

Figure 1 is a perspective view of an industrial robot of the articulated arm type embodying the present invention, showing the external construction thereof; and

Fig. 2 is a schematic sectional view of a motion transmitting mechanism, embodying the present invention, formed in the robot forearm and the robot wrist unit of the industrial robot shown in Fig. 1.

BEST MODE FOR CARRYING OUT THE INVENTION

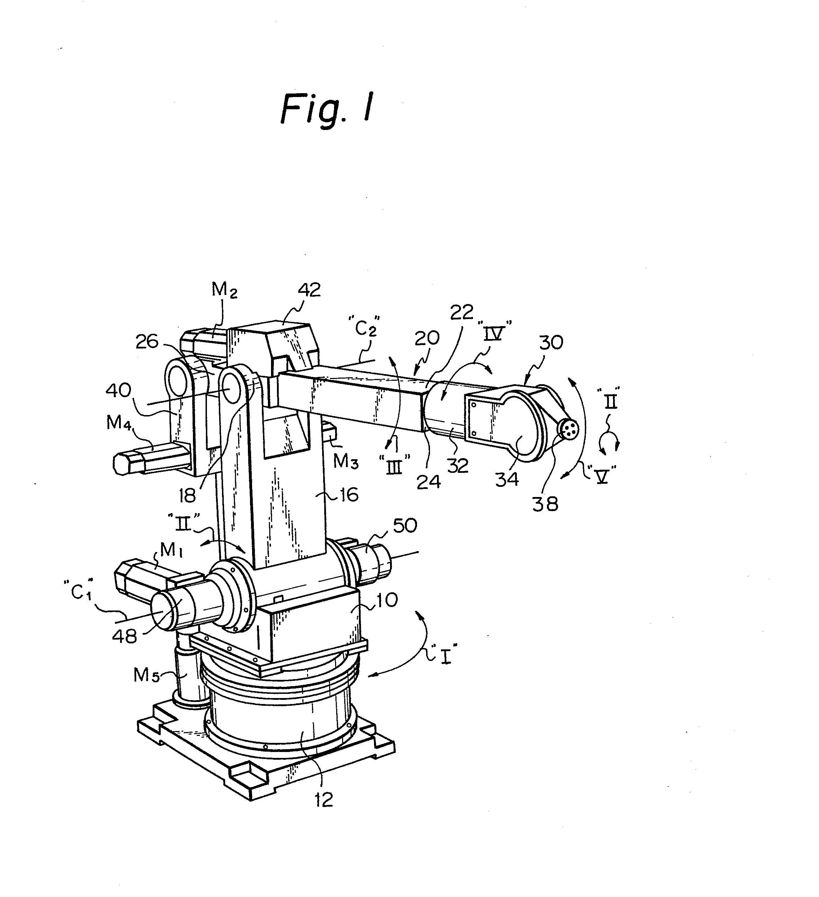

Referring to Fig. 1, the industrial robot has a robot body 10 mounted on a pedestal 12 so as to be rotatable in directions indicated by the double-headed arrow "I". The robot body 10 and the pedestal 12 are fastened together with screw bolts or the like. The lower end of a robot upper arm 16 is joined pivotally to the upper end of the robot body 10 for rotation about an axis $C_1$. Thus the robot upper arm 16 is capable of swinging in directions indicated by the double-headed arrow "II". A robot forearm 20 is joined pivotally to the upper end 18 of the robot upper arm 16 for up-down movement, as indicated by the double-headed arrow "III", about an axis $C_2$. The robot forearm 20 has a main forearm part 22 extending forward from the axis $C_2$ and having a wrist unit 30 attached thereto at the front extremity 24. The robot forearm 20 has also a comparatively short rear extension 26 extending rearward from the axis $C_2$. The wrist unit 30 comprises a wrist base 32, an outer wrist 34 fixed to the wrist base 32, an inner wrist 36 held by the outer wrist 34, and a hand holding unit 38 attached to the inner wrist 36. The wrist base 32 is adapted to rotate together with the outer wrist 34 in directions indicated by the double--headed arrow "IV", with respect to the main forearm part 22. The inner wrist 36 is adapted to rotate with respect to the outer wrist 34 in directions indicated by the double-headed arrow "V". Driving sources for driving the robot body 10, the robot upper arm 16, the robot forearm 20, and the wrist unit 30 are provided. A motor $M_5$ disposed near the pedestal 12 is a driving source for driving the robot body 10 in directions indicated by the double-headed arrow "I", a motor $M_1$ is a driving source for driving the robot upper arm 16 for swing motion in directions indicated by the double--headed arrow "II", and a motor, not shown, disposed behind the robot upper arm 16 in parallel to the motor $M_1$ is a driving source for the up-down motion, in directions indicated by the double-headed arrow "III", of the robot forearm 20. Various mechanisms such as motion transmitting mechanisms, direction changing mechanisms, and speed reducing mechanisms are interposed as mentioned above between those motors functioning as driving sources and the corresponding driven components, for the appropriate control of the motions of the driven components. Reference numerals 48 and 50 indicate some of those mechanisms.

Three motors $M_2$, $M_3$, and $M_4$ serving as driving sources for driving the wrist base 32, the outer wrist 34, the inner wrist 36, and the hand holding unit 38 of the wrist unit 30 attached to the front extremity 24 of the robot forearm 20 are mounted collectively on the rear extension 26 of the robot forearm 20. That is, the motors $M_2$, $M_3$, and $M_4$ are located so that the moment of mass of the rear extension 26, inclusive of the motors $M_2$, $M_3$, and $M_4$, about the axis $C_2$ counter-balances the moment of mass of the main forearm part 22 of the forearm 20 about the axis $C_2$. A frame 40 contains a motion transmitting mechanism or a speed reducing mechanism for transmitting the rotations of the respective output shafts of the motors $M_3$ and $M_4$, while a housing 42 contains a motion transmitting mechanism or a speed reducing mechanism for transmitting the rotation of the output shaft of the motor $M_2$. Placing the motors $M_2$, $M_3$, and $M_4$, which serve as driving sources for the motions of three degrees of freedom of the wrist unit 30, on the rear extension 26 of the forearm 20 balances the forearm 20 about the axis $C_2$. Furthermore, since the motors $M_2$, $M_3$, and $M_4$ are disposed away from the wrist unit 30, a reduction in the weight of the wrist unit 30 per se is attained, and a reduction in the loads that act on the motors $M_2$, $M_3$, and $M_4$ is also attained. In Fig. 1, the embodiment of the present invention is shown as applied to an industrial robot of the articulated arm type in which the robot body 10 is adapted to rotate on the pedestal 12. However, it is obvious that the essential constitution of the present invention, which will be described in detail hereinafter, is applicable also to an industrial robot of the articulated arm type in which the robot body is adapted to traverse on a horizontal table.

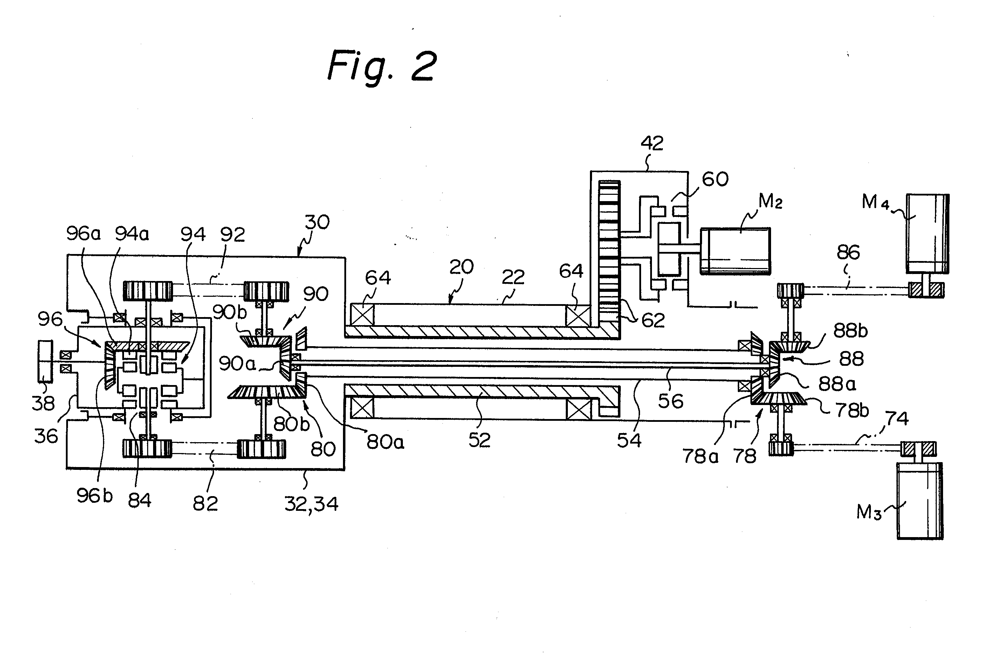

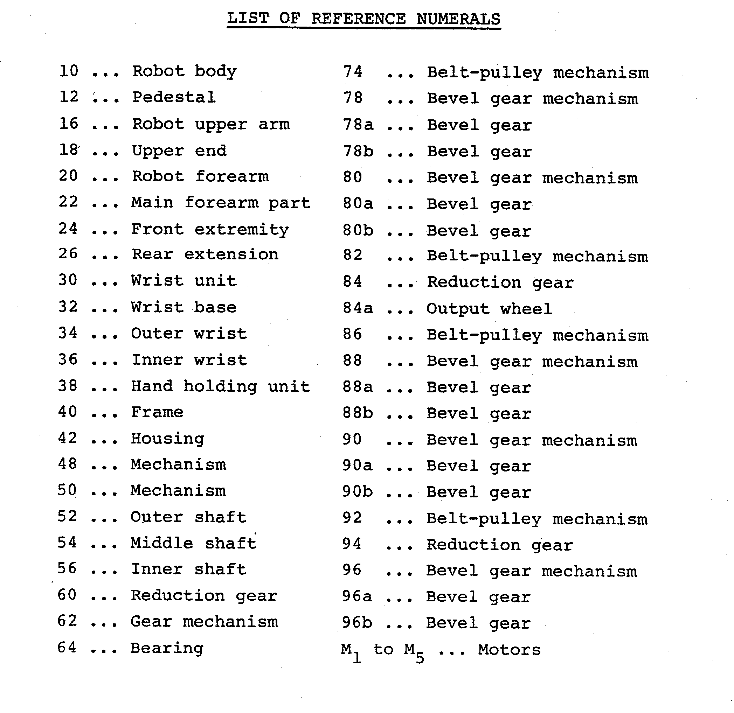

Figure 2 is a schematic illustration of a motion transmitting mechanism embodying the present invention, which is mounted in the robot forearm 20 and the wrist unit 30, and is capable of providing three degrees of freedom of motion for the wrist unit 30. Referring to Fig. 2, the wrist unit 30 is driven for various motions in three degrees of freedom, as described hereinbefore, by three motors $M_2$, $M_3$, and $M_4$ serving as driving sources. These motors are electric servomotors adapted to be controlled by command signals given by an external robot control unit. The rotative driving force of the motor $M_2$ is reduced in speed by a reduction gear 60, and is transmitted through a gear mechanism 62, consisting of a pair of gears and disposed at the inner end of an outer shaft 52 contained within the main forearm part 22 of the robot forearm 20, to the outer shaft 52. The rotative driving force is then transmitted from the outer shaft 52 to the wrist base 32 and the outer wrist 34, which are connected to the outer end of the outer shaft 52, to actuate the outer wrist 34 for swivel motion in directions indicated by the double-headed arrow "IV" (Fig. 1). Indicated at 64 are bearings inserted between the main forearm part 22 and the outer shaft 52. A publicly known Harmonic Drive (registered trademark) reduction gear is advantageously applicable as the reduction gear 60, owing to its compact construction and high reduction ratio. The rotative driving force of the motor $M_3$ is transmitted through a belt-pulley mechanism 74 and a bevel gear mechanism 78, consisting of a pair of bevel gears 78a and 78b and disposed at the inner end of a hollow middle shaft 54, extending coaxially within the outer shaft 52 to the middle shaft 54. The bevel gear mechanism 78 is employed to enable the coaxial arrangement of the motion transmitting mechanism for the motor $M_3$ and a motion transmitting mechanism for transmitting the rotative force of the motor $M_4$, so that three-motion transmitting mechanisms can compactly be contained within the robot forearm 20 and the wrist unit 30, and so that the motors $M_3$ and $M_4$ can be disposed on the opposite sides of the robot forearm 20 respectively, for a balanced construction. The rotative force transmitted to the middle shaft 54 is then transmitted through a bevel gear mechanism 80, consisting of a pair of bevel gears 80a and 80b and disposed at the outer end of the middle shaft 54 and within the interior of the outer wrist 34, and through a belt-pulley mechanism 82 to a reduction gear 84. Thus the rotative driving force of the motor $M_3$ is transmitted to an inner wrist 36 fixed to the output wheel 84a of the reduction gear 84 (Harmonic Drive reduction gear), so that the inner wrist 36 pivots on an axis practically perpendicularly intersecting the axis of rotation of the middle shaft 54. The directions of the pivotal motion of the inner wrist 36 are indicated by the double-headed arrow "V" in Fig. 1. This pivotal motion of the inner wrist 36 is defined by the directions indicated by the double-headed arrow "V" with respect to the outer wrist 34. Accordingly, the hand holding unit 38 mounted in the inner wrist 36 is moved integrally with the inner wrist 36 in the same direction.

The rotative driving force of the motor $M_4$ is transmitted to the inner shaft 56 through a belt-pulley mechanism 86 and then through a bevel gear mechanism 88, consisting of a pair of bevel gears 88a and 88b and disposed at the inner end of the inner shaft 56, extending coaxially with and along the center axis of the outer shaft 52 and the middle shaft 54. The rotative driving force transmitted to the inner shaft 56 is then transmitted to a reduction gear 94, also a Harmonic Drive reduction gear disposed inside the inner wrist 36, through a bevel gear mechanism 90 consisting of a pair of bevel gears 90a and 90b provided opposite to the bevel gear mechanism 80 at the outer end of the inner shaft 56 and inside the outer wrist 34, and through a belt-pulley mechanism 92 provided also inside the outer wrist 34. Thus the rotative driving force of the motor $M_4$ is transmitted to the hand holding unit 38 through a bevel gear mechanism 96 consisting of a bevel gear 96a fixed to the output wheel 94a of the reduction gear 94 and a bevel gear 96b engaging the bevel gear 96a. Accordingly, the hand holding unit 38 is driven for pivotal motion about an axis which is practically coaxial with the axis of rotation of the inner shaft 56, as indicated by the double-headed arrow "VI". The hand holding unit 38, and thus a robot hand (not shown) attached to the hand holding unit 38, pivots in the directions indicated by the double headed arrow "VI" with respect to the inner wrist 36. Since the motors $M_2$, $M_3$, and $M_4$ are electric servomotors, as described hereinbefore, it should be understood that the motions in three degrees of freedom of the wrist unit 30 can be controlled for desired angles of rotation by commands given by the robot control unit.

In the embodiment described hereinbefore, reduction gears of the Harmonic Drive system are disposed inside the inner wrist 36 to form the mechanism in a compact construction. Alternatively, it is also possible to dispose reduction gears of the Harmonic Drive system inside the outer wrist 34 and between the bevel gear mechanisms 80 and 90 and the corresponding belt-pulley mechanisms 82 and 92 respectively, to provide the same functions and effects as the embodiment described herein.

- 9 -  0121576

## CLAIMS

1. An industrial robot of the articulated arm type having a robot forearm pivotally joined for an up-down swing motion to the upper end of an upper arm swingably joined at the lower end thereof to a robot body, and a wrist unit joined to the extremity of said robot forearm; characterized by comprising three coaxial rotary shafts, namely, an outer shaft, a middle shaft, and an inner shaft, provided within said forearm; an outer wrist box connected to one end of said outer shaft for rotation at a reduced speed together with said outer shaft; an inner wrist box interlocked within said outer wrist box through at least a bevel gear mechanism and a reduction gear with said middle shaft and capable of pivoting on an axis of rotation practically perpendicularly intersecting the axis of rotation of said outer shaft; a hand holding unit interlocked within said outer wrist box through at least two sets of bevel gear mechanisms and a reduction gear with said inner shaft and capable of turning about an axis extending practically in alignment with the axis of rotation of said outer wrist box; and rotative driving means for individually driving said three rotary shafts.

2. An industrial robot of the articulated arm type according to Claim 1, wherein said rotative driving means includes a motor for driving at least one of said three rotary shafts, which motor is attached to the rear part of said robot forearm with respect to the axis of the up-down swing motion of said robot forearm.

3. An industrial robot of the articulated arm type according to Claim 1, wherein said two pairs of bevel gear mechanisms interposed between said inner shaft and said hand unit are interlocked with each other by a set of belt-pulley mechanisms.

4. An industrial robot of the articulated arm type according to Claim 1 or 3, wherein said reduction gears are of the Harmonic Drive type.

0121576

PAPER FOR EXPLANATION BASED ON PROVISIONS OF
ARTICLE 19(1) OF THE PCT

Claims described in the replacement sheets are different from the originally filed claims in the following points.

(1)  The original claim 1 is amended so as to include further limitations with respect to the scope thereof.

(2)  The original claim 2 is deleted.

(3)  The original claims 3 and 4 are not amended.

(4)  A new claim 5 is added.

(Replacement)

<u>CLAIMS</u>

1. (Amended) An industrial robot of the articulated arm type having a robot forearm pivotally joined for an up-down swing motion to the upper end of an upper arm swingably joined at the lower end thereof to a robot body, and a wrist unit joined to the extremity of said robot forearm; characterized by comprising three coaxial rotary shafts, namely, an outer shaft, a middle shaft, and an inner shaft, provided within said forearm; an outer wrist box connected to one end of said outer shaft for rotation at a reduced speed together with said outer shaft; an inner wrist box interlocked within said outer wrist box through at least a bevel gear mechanism and a reduction gear with said middle shaft and capable of pivoting on an axis of rotation practically perpendicularly intersecting the axis of rotation of said outer shaft; a hand holding unit interlocked within said outer wrist box through at least two sets of bevel gear mechanisms and a reduction gear with said inner shaft and capable of turning about an axis extending practically in alignment with the axis of rotation of said outer wrist box; and rotative driving motors for individually rotatively driving said three rotary shafts, one of said three rotative driving motors for driving at least one of said three rotary shafts, being mounted on a frame depending in parallel with said upper arm on the rear side of said robot forearm with respect to the axis of the up-down swing motion of said robot forearm.

2. (Deleted)

3. An industrial robot of the articulated arm type according to Claim 1, wherein said two pairs of bevel gear mechanisms interposed between said inner shaft and said hand unit are interlocked with each other by a set of belt-pulley mechanisms.

4. An industrial robot of the articulated arm type according to Claim 1 or 3, wherein said reduction gears are of the Harmonic Drive type.

5.    (Added)    An industrial robot of the articulated arm type according to claim 1, wherein two of said rotative driving motors for individually rotatively driving said three rotary shafts, which drive at least two of said three rotary shafts, are arranged in parallel with one another and mounted on said frame, and wherein the remaining rotative driving motor is attached to the rear part of said robot forearm with respect to the axis of the up-down swing motion of said robot forearm.

0121576

## Fig. I

*Fig. 2*

0121576

## LIST OF REFERENCE NUMERALS

| | | | | |
|---|---|---|---|---|
| 10 | ... Robot body | | 74 | ... Belt-pulley mechanism |
| 12 | ... Pedestal | | 78 | ... Bevel gear mechanism |
| 16 | ... Robot upper arm | | 78a | ... Bevel gear |
| 18 | ... Upper end | | 78b | ... Bevel gear |
| 20 | ... Robot forearm | | 80 | ... Bevel gear mechanism |
| 22 | ... Main forearm part | | 80a | ... Bevel gear |
| 24 | ... Front extremity | | 80b | ... Bevel gear |
| 26 | ... Rear extension | | 82 | ... Belt-pulley mechanism |
| 30 | ... Wrist unit | | 84 | ... Reduction gear |
| 32 | ... Wrist base | | 84a | ... Output wheel |
| 34 | ... Outer wrist | | 86 | ... Belt-pulley mechanism |
| 36 | ... Inner wrist | | 88 | ... Bevel gear mechanism |
| 38 | ... Hand holding unit | | 88a | ... Bevel gear |
| 40 | ... Frame | | 88b | ... Bevel gear |
| 42 | ... Housing | | 90 | ... Bevel gear mechanism |
| 48 | ... Mechanism | | 90a | ... Bevel gear |
| 50 | ... Mechanism | | 90b | ... Bevel gear |
| 52 | ... Outer shaft | | 92 | ... Belt-pulley mechanism |
| 54 | ... Middle shaft | | 94 | ... Reduction gear |
| 56 | ... Inner shaft | | 96 | ... Bevel gear mechanism |
| 60 | ... Reduction gear | | 96a | ... Bevel gear |
| 62 | ... Gear mechanism | | 96b | ... Bevel gear |
| 64 | ... Bearing | | $M_1$ to $M_5$ | ... Motors |

## I. CLASSIFICATION OF SUBJECT MATTER (if several classification symbols apply, indicate all) [3]

According to International Patent Classification (IPC) or to both National Classification and IPC

Int. Cl.[3] B25J 9/00

## II. FIELDS SEARCHED

| Minimum Documentation Searched [4] | |
|---|---|
| Classification System | Classification Symbols |
| I P C | B25J 9/00, 17/00 - 02 |

| Documentation Searched other than Minimum Documentation to the Extent that such Documents are Included in the Fields Searched [5] | |
|---|---|
| Jitsuyo Shinan Koho | 1965 – 1983 |
| Kokai Jitsuyo Shinan Koho | 1971 – 1983 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X | JP,A, 57-121490 (Kuka Schweißanlagen und Roboter GmbH) 28, July, 1982 (28. 07. 82) Column 1, line 6 to Column 3, line 4, Column 21, lines 7 to 20, Figs. 1, 2 & EP,A1, 54763 & DE,A1, 3048067 & AU,A1, 7856181 & ES,A1, 507712 & ES, 507712 | 1 – 4 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search [2] | Date of Mailing of this International Search Report [2] |
|---|---|
| January 10, 1984 (10. 01. 84) | January 23, 1984 (23. 01. 84) |

| International Searching Authority [1] | Signature of Authorized Officer [20] |
|---|---|
| Japanese Patent Office | |

Form PCT/ISA/210 (second sheet) (October 1981)